# EUROPEAN PATENT APPLICATION

(11) **EP 4 768 231 A1**
(43) Date of publication of application: **01.07.2026**
(21) Application number: 25213197.4
(22) Date of filing: 04.11.2025
(51) Int. Cl.: B29C 67/20, B29C 33/38, B29C 33/40, B29C 35/02, B29C 39/10, B29C 43/18

(54) **ELASTOMER COMPONENTS, APPARATUSES COMPRISING AN ELASTOMER COMPONENT, AND METHODS COMPRISING AN ELASTOMER COMPONENT**

(30) Priority: 27.12.2024 US 202419003785
(71) Applicant: The Boeing Company, Arlington, VA 22202 (US)
(72) Inventor: Kim, Shawn S., Arlington, VA, 22202 (US)
(74) Representative: Hoffmann Eitle

(57) **Abstract**

An elastomer component (10) comprised of an elastomer material (12) having an air volume fraction (AVF) of greater than 5%, and the elastomer component (10) is a three-dimensional solid. An assembly (100) comprises an outer barrier (30), at least one elastomer component (10), and a curable material (20). A method comprises inserting (202) an elastomer component (10) and a curable material (20) into an outer barrier (30) to form an assembly (100) and heating (204) the assembly (100).

## Description

### FIELD

The present disclosure relates to elastomer components, apparatuses comprising an elastomer component, and methods comprising an elastomer component.

### BACKGROUND

Composite components comprised of curable materials frequently require specialized machines and processes for manufacturing. For example, composite components are often cured using an autoclave. The geometry of the composite component can create further manufacturing difficulties. For example, creating cavities within a composite component can increase manufacturing difficulty.

### SUMMARY

Elastomer components, apparatuses comprising an elastomer component, and methods comprising an elastomer component are disclosed. In some examples, an elastomer component is comprised of an elastomer material having an air volume fraction (AVF) of greater than 5% and the elastomer component is a three-dimensional solid.

An example of an assembly comprises an outer barrier, at least one elastomer component, and a curable material.

An example of a method comprises inserting an elastomer component and curable material into an outer barrier to form an assembly and heating the assembly.

### BRIEF DESCRIPTION OF THE DRAWINGS

Fig. 1 is a schematic cross-sectional diagram representing an elastomer component of an apparatus.
Fig. 2 is a schematic top view diagram representing elastomer material and particles.
Fig. 3 is a schematic top view diagram representing elastomer components and curable material.
Fig. 4 is a schematic top view diagram representing curable material and internal cavities.
Fig. 5 is a schematic diagram representing particles and pores within elastomer material.
Fig. 6 is a flowchart schematically representing methods comprising forming an assembly and heating the assembly.

### DESCRIPTION

Elastomer components, apparatuses comprising an elastomer component, and methods comprising an elastomer component are disclosed. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

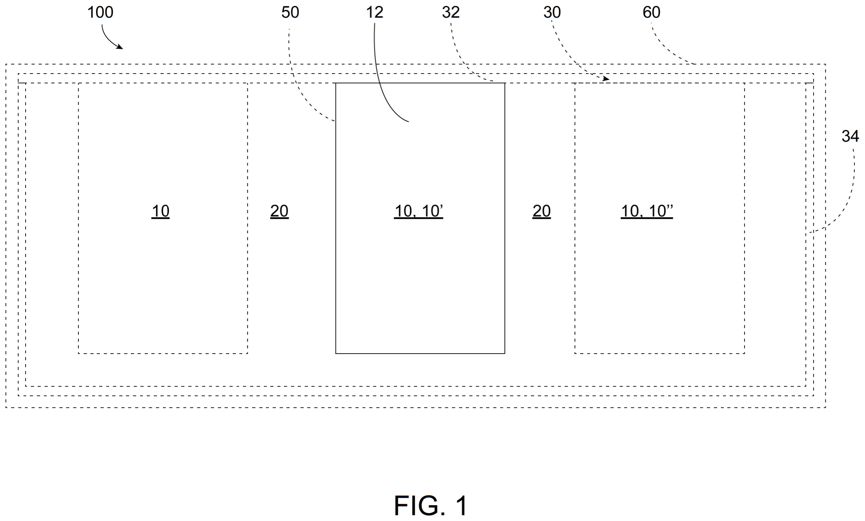

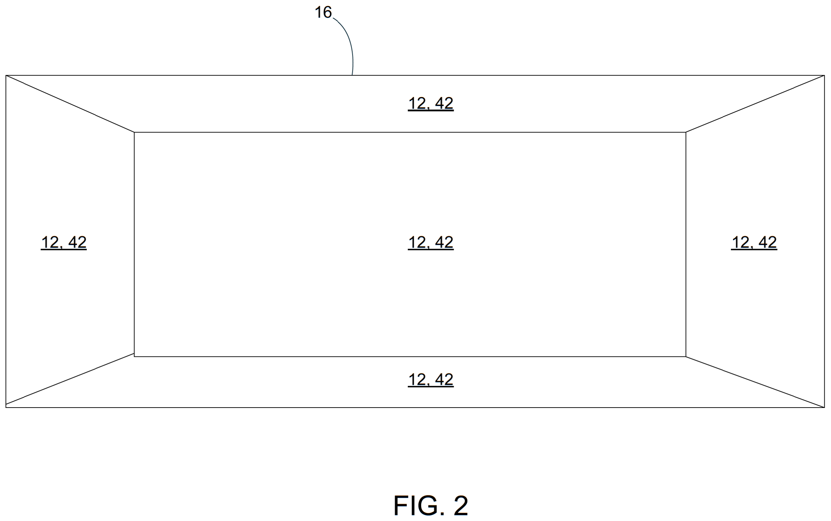

Fig. 1 is a schematic illustration of elastomer components, apparatuses, and elastomer material. Illustrative non-exclusive examples of elastomer components, apparatuses, and elastomer material are illustrated in Fig. 2-5. Where appropriate, the reference numerals from the schematic illustration of Fig. 1 are used to designate corresponding parts of the examples of Figs. 2-5; however, the examples of Figs. 2-5 are non-exclusive and do not limit elastomer components, apparatuses, and elastomer material to the illustrated embodiments of Figs. 2-5. That is, elastomer components, apparatuses, and elastomer material are not limited to the specific embodiments of Figs. 2-5, and elastomer components, apparatuses, and elastomer material may incorporate any number of the various aspects, configurations, characteristics, properties, etc. of elastomer components, apparatuses, and elastomer material that are illustrated in and discussed with reference to the schematic representations of Fig. 1 and/or the embodiments of Figs. 2-5, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to the examples of Figs. 2-5; however, it is within the scope of the present disclosure that the previously discussed features, variants, etc. may be utilized with the examples of Figs. 2-5.

Elastomer components can be used to manufacture composite components comprising curable materials. For example, an elastomer component can be arranged within curable material to form an assembly, and the assembly is heated to cure the curable material. After curing, the elastomer component can be removed leaving an internal cavity within the cured material. The elastomer component can then be reused for manufacturing further components.

As schematically illustrated in Fig. 1, an elastomer component 10 comprises an elastomer material 12 having an air volume fraction (AVF) of greater than 5%, wherein the elastomer component is a three-dimensional solid.

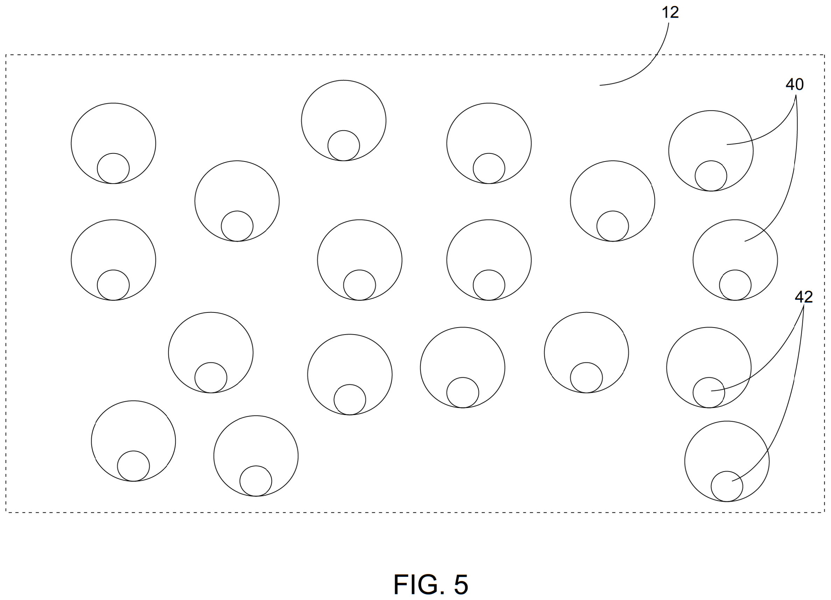

Fig. 5 schematically illustrates an example of elastomer material 12 with the air volume fraction (AVF) formed by pores 40 within elastomer material 12. In one example, elastomer material 12 is silicone. In another example, elastomer material 12 is rubber. In the example of Fig. 5, pores 40 comprise trapped gas which forms the air volume of the AVF. Air volume fraction (AVF) is referred to herein as a fraction of a volume of gas within a given volume comprising all constituents. In the example of Fig. 5, the AVF is the fraction of the volume of gas trapped within pores 40 within a given volume. The given volume of Fig. 5 would comprise elastomer material 12, particles 42, and pores 40. In other words, the AVF is a fraction of a volume of gas within a total volume. The term air volume fraction (AVF) is commonly used and includes the word "air," however the gas that comprises the gas volume is not required to be air, and other gases may be used for the volume of gas. For example, particles 42 could be infused with nitrogen gas which would be released when particles 42 are heated.

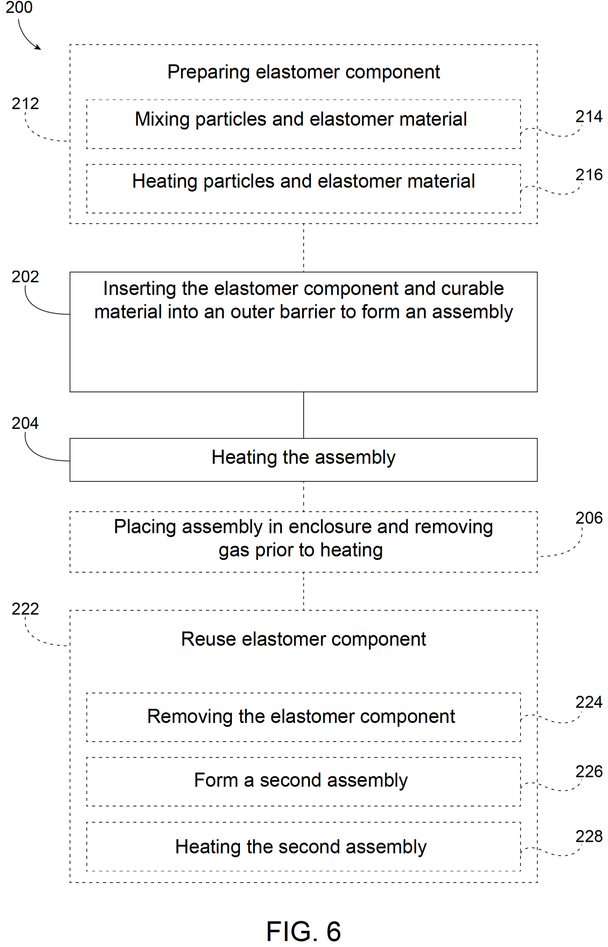

Fig. 5 depicts an example of pores 40 distributed throughout elastomer material 12. In another example, pores 40 are distributed homogenously throughout elastomer component 10 such that elastomer component 10 has isotropic compressive stiffness. The distribution of pores 40 is influenced by the method of manufacturing the elastomer component 10. Fig. 6 includes an example of preparing 212 an elastomer component 10 which includes mixing 214 particles 42 comprising trapped gas into elastomer material 12 and then heating 216 the mixture. This method distributes the particles 42 throughout elastomer material 12 which then form pores 40.

Examples of particles 42 are comprised of particle material which comprises a volume of gas. Further examples of particles 42 are configured to release gas into pores 40 when particles 42 are heated. Fig. 5 schematically illustrates particles 42 occupying a relatively small volume within pores 40 which represents particles 42 which previously comprised a volume of gas that has been released from particles 42 into pores 40. In one example, particles 42 are comprised of plastic foam and the plastic foam comprises up to 98% gas by volume. When the plastic foam is heated, the gas is released from particles 42 forming a pore 40 within the elastomer material 12.

Further examples of particles 42 are comprised of materials that shrink or otherwise do not substantially contribute to the mechanical properties of elastomer component 10 after the gas has been released from particles 42. One example of particles 42 is comprised of foam and/or remnants of foam that has been heated. Other examples of particles 42 are comprised of porous materials. Further examples of particles 42 are comprised of plastic. Examples of plastic particles 42 are hollow spheres.

The AVF of elastomer component 10 modifies the mechanical properties of elastomer material 12. In one example, a bulk modulus of an elastomer component 10 comprising a greater than 5% AVF is less than a bulk modulus of elastomer material 12 without an air volume fraction. Furthermore, controlling the amount of AVF when forming an elastomer component 10 allows for the control of mechanical properties of elastomer component 10. In one example, increasing the AVF of elastomer component 10 decreases a bulk modulus of elastomer component 10. In other words, incorporating more gas into elastomer material 12 can lower the bulk modulus of the resulting elastomer component 10. The use of particles 42 as carriers of gas allows for control of the amount of AVF in an elastomer component 10. Examples of elastomer component 10 have an AVF in a range of 5-50%, 15-25%, or 17-25%.

Examples of elastomer component 10 can form part of an assembly 100. One example of assembly 100 comprises an outer barrier 30, at least one elastomer component 10, and a curable material 20. The at least one elastomer component 10 is comprised of an elastomer material 12 having an air volume fraction AVF of greater than 5%, and the elastomer component is a three-dimensional solid. Elastomer component 10 of assembly 100 could be any of the elastomer components 10 disclosed herein.

Fig. 1 depicts an example of outer barrier 30 completely surrounding elastomer component 10 and curable material 20. Further examples of outer barrier 30 are pressure vessels to withstand the pressure generated during heating of curable material 20 and elastomer component 10. Examples of outer barrier 30 are comprised of steel or other metal. Fig. 1 depicts an example of outer barrier 30 comprising a first component 32 and a second component 34, and first component 32 and second component 34 are fastened together to form a pressure vessel. Fig. 1 further depicts an example where elastomer component 10 and curable material 20 are arranged between first component 32 and second component 34 and/or within second component 34. In this example, first component 32 and second component 34 are fastened together to form the pressure vessel prior to the heating of assembly 100. Forming the pressure vessel allows for generating a compaction pressure within outer barrier 30 during the heating 204 of the assembly 100. Examples of the generated compaction pressure are in a range of 15-1200 pounds per square inch (PSI), 25-200 PSI, 50-150, PSI, or 75-125 PSI.

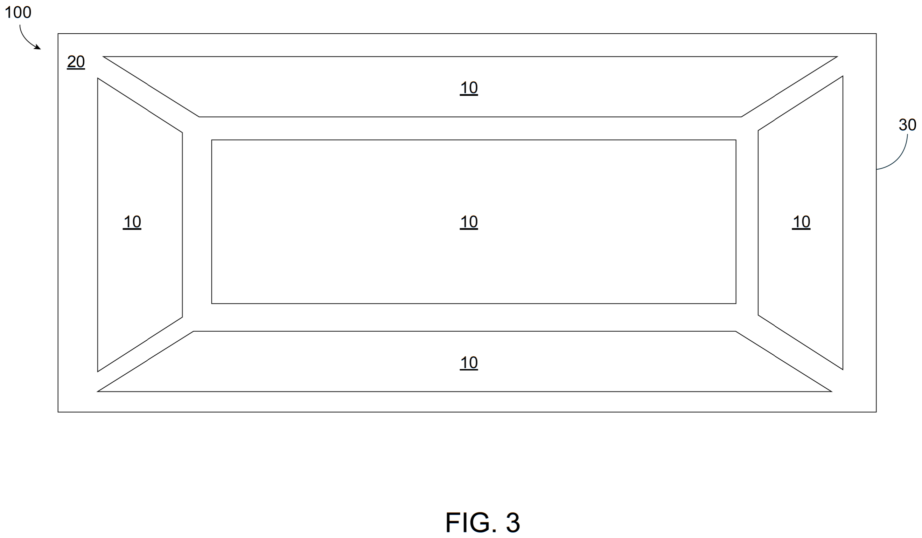

One or more elastomer components 10 and curable material 20 can have many different arrangements in assembly 100. Fig. 1 depicts an example comprising three elastomer components 10, 10', 10" arranged within curable material 20. Portions of curable material 20 are arranged between two elastomer components 10. Portions of curable material 20 also are arranged between elastomer components 10 and outer barrier 30. Fig. 3 depicts a top view of assembly 100 comprising five elastomer components 10 and curable material 20. Curable material 20 of Fig. 3 is arranged between elastomer components 10 and between elastomer components 10 and outer barrier 30.

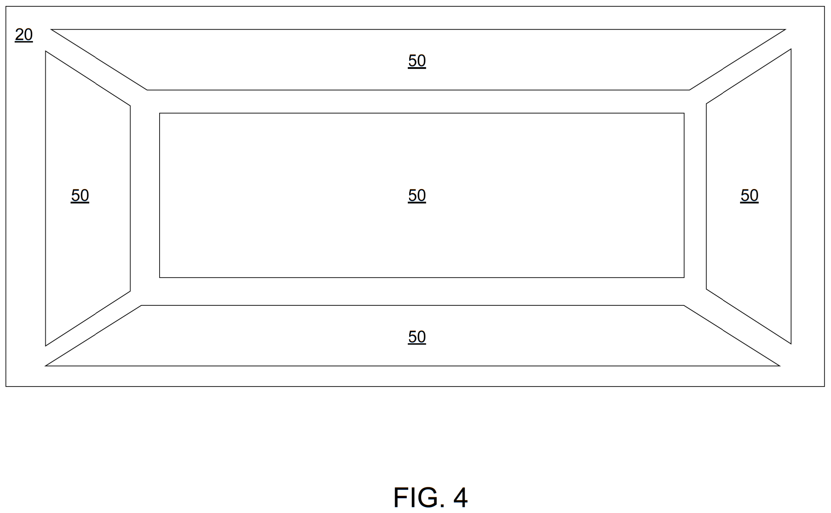

Examples of elastomer component 10 are arranged within an internal cavity within curable material 20. Fig. 1 depicts elastomer component 10 within internal cavity 50 of curable material 20. In a further example, after curing, elastomer component 10 is removed from curable material 20, and internal cavity 50 remains. The example of Fig. 1 further depicts assembly 100 comprising an elastomer component 10 arranged to form an internal cavity 50 within the curable material 20, where the internal cavity 50 is open to an exterior of curable material 20 on one end. An internal cavity 50 open to the exterior of the curable material 20 allows for removal of elastomer component 10 after curing. Fig. 4 depicts a top view of curable material 20 including internal cavities 50. Fig. 4 further depicts internal cavities 50 within a component formed by cured curable material 20. Comparing Figs. 3 and 4, it can be seen that internal cavities 50 are formed around elastomer components 10. Internal cavities 50 can be used to reduce weight of a component comprised of curable materials.

Conventional manufacturing of composite materials often use stiffening structures to support areas of curable materials. Stiffeners often are used to stabilize voids within curable material. Examples of assembly 100 do not include stiffening structures. In other words, examples of assembly 100 do not comprise structures other than curable material 20 and elastomer components 10. Elastomer components 10 provide support for curable material 20 during the curing process.

Fig. 6 schematically provides a flowchart that represents illustrative, non-exclusive examples of methods according to the present disclosure. In Fig. 6, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 6 are not limiting and other methods and steps are within the scope of the present disclosure, including methods having greater than or fewer than the number of steps illustrated, as understood from the discussions herein.

Fig. 6 depicts one example of method 200 which comprises inserting 202 an elastomer component and a curable material into an outer barrier to form an assembly (for example elastomer component 10, curable material 20, outer barrier 30, and assembly 100, as disclosed herein), and heating 204 the assembly 100. The elastomer component of method 200 could be any of elastomer components 10 disclosed herein. The assembly of method 200 could be any of assemblies 100 disclosed herein.

As described above, elastomer components 10 can be arranged within internal cavities 50 of curable material 20. An example of heating 204 the assembly 100 cures curable material 20 which sets and stiffens curable material 20. Examples of heating 204 the assembly 100 comprise heating assembly 100 to a temperature in a range of 70-350 degrees Fahrenheit (F). Elastomer components 10 can then be removed leaving internal cavities 50 in the cured curable material 20.

As discussed above with reference to assembly 100, heating the assembly creates pressure within assembly 100. Therefore, examples of forming the assembly 100 comprise fastening a first component 32 and a second component 34 together to form a pressure vessel prior to the heating 204 of the assembly 100.

Elastomer component 10 also can be used with multiple assemblies 100 comprising curable material 20. As shown in Fig. 6, an example of reusing 222 the elastomer component comprises removing 224 elastomer component 10 from a first curable material 20', inserting 226 elastomer component 10 and a second curable material 20" into an outer barrier 30 to form a second assembly 100', and heating 228 second assembly 100'. In this way, elastomer components 10 can be used to form many components comprising curable materials 20.

Examples of method 200 of Fig. 6 may also comprise placing 206 the assembly 100 in an enclosure 60 and removing 206 gas from the enclosure 60 prior to heating the assembly 100. Many examples of curable materials 20 are cured using a vacuum. A vacuum may assist with drawing air out of curable materials.

As shown in Fig. 6, examples of methods 200 also may comprise preparing 212 elastomer component 10. In one example, preparing 212 elastomer component 10 comprises mixing 214 particles 42 with elastomer material 12 and heating 216 the particles 42 and the elastomer material 12. Fig. 2 depicts an example of mixing elastomer material 12 and particles 42 in a mold 16. Heating 216 particles 42 and elastomer material 12 sets the elastomer material forming elastomer component 10. Elastomer components 10 can then be used in assemblies 100 such as the example of Fig. 3. As discussed above, particles 42 have an AVF and the gas is released into pores 40. Either heating 216 or heating 204 of assembly 100 may cause particles 42 to release trapped gas into pores 40. Examples of particles 42 comprise a greater than 50% AVF prior to the heating 216 particles 42 and elastomer material 12 or the heating 204 assembly 100.

Examples of heating 204 assembly 100 generates compaction pressure within outer barrier 30. Examples including curable materials 20 and elastomer component 10 expand when heated but are constrained by outer barrier 30 which generates pressure. The AVF of elastomer components 10 reduces generated compaction pressure. As discussed above, in examples of elastomer component 10, increasing an AVF of elastomer component 10 decreases a bulk modulus of elastomer component 10. An elastomer component 10 within the assembly with a lower bulk modulus will reduce the compaction pressure generated. Examples of generated compaction pressure within outer barrier 30 are in a range of 15-1200 PSI.

Conventional curing techniques, such as an autoclave, apply pressure to curing materials using an external source. Examples of assemblies 100 and methods 200 do not include applying an external source of pressure to assembly 100.

Illustrative, non-exclusive examples of inventive subject matter according to the present disclosure are described in the following enumerated paragraphs:
A. An elastomer component (10) comprised of:
   an elastomer material (12) having an air volume fraction (AVF) of greater than 5%,
   wherein the elastomer component (10) is a three-dimensional solid.
A1. The elastomer component (10) of paragraph A, wherein the AVF is formed by pores (40) within the elastomer component (10), and wherein the pores (40) comprise trapped gas.
A2. The elastomer component (10) of paragraph A1, wherein the pores (40) are distributed throughout the elastomer component (10).
A3. The elastomer component (10) of any of paragraphs A1-A2, wherein the pores (40) are distributed homogenously throughout the elastomer component (10) such that the elastomer component (10) has an isotropic compressive stiffness.
A4. The elastomer component (10) of any of paragraphs A1-A3, wherein the pores (40) comprise particles (42).
A4.1. The elastomer component (10) of paragraph A4, wherein the particles (42) are comprised of foam or remnants of foam.
A4.2. The elastomer component (10) of any of paragraphs A4-A4.1, wherein the particles (42) are comprised of a particle material which comprises a volume of gas.
A4.3. The elastomer component (10) of any of paragraphs A4-A4.2, wherein the particles (42) are comprised of plastic.
A4.4. The elastomer component (10) of any of paragraphs A4-A4.3, wherein the particles (42) are configured to release gas into the pores (40) when heated.
A5. The elastomer component (10) of any of paragraphs A-A4.4, wherein the elastomer material (12) is silicone.
A6. The elastomer component (10) of any of paragraphs A-A5, wherein the AVF is in a range of 5-50%.
A6.1 The elastomer component (10) of any of paragraphs A-A5, wherein the AVF is in a range of 15-25%.
A6.2 The elastomer component (10) of any of paragraphs A-A5, wherein the AVF is in a range of 17-25%.
A7. The elastomer component (10) of any of paragraphs A-A6.2, wherein a bulk modulus of the elastomer component (10) is less than a bulk modulus of the elastomer material (12) without the AVF.
A7.1. The elastomer component (10) of any of paragraphs A- A6.2, wherein increasing the AVF of the elastomer component (10) decreases a bulk modulus of the elastomer component (10).
B. An assembly (100) comprising:
   an outer barrier (30);
   at least one elastomer component (10) of paragraphs A- A7.1; and
   a curable material (20).
B1. The assembly (100) of paragraph B, wherein the at least one elastomer component (10) comprises two elastomer components (10), and wherein at least one portion of the curable material (20) is arranged between the two elastomer components (10).
B2. The assembly (100) of any of paragraphs B-B1, wherein the at least one elastomer component (10) is arranged to form an internal cavity (50) within the curable material (20), and wherein the internal cavity (50) is open to an exterior of the curable material (20) on one end.
B3. The assembly (100) any of paragraphs B-B2, wherein the curable material does not comprise stiffeners.
B4. The assembly (100) any of paragraphs B-B3, wherein the outer barrier (30) completely surrounds the at least one elastomer component (10) and the curable material (20).
B4.1. The assembly (100) of paragraph B4, wherein the outer barrier (30) is fastened together to form a pressure vessel, and wherein the at least one elastomer component (10) and the curable material (20) are arranged within the pressure vessel.
C. A method (200) comprising:
   inserting (202) the elastomer component (10) of any of paragraphs A-A7.1 and a curable material (20) into an outer barrier (30) to form an assembly (100); and
   heating (204) the assembly (100).
C1. The method (200) of paragraph C, wherein the curable material (20) is a first curable material (20'), and the method (200) further comprises reusing (222) the elastomer component (10), wherein the reusing (222) comprises:
   removing (224) the elastomer component (10) from the first curable material (20');
   inserting (226) the elastomer component (10) and a second curable material (20") into the outer barrier (30) or a second outer barrier (30') to form a second assembly (100'); and
   heating (228) the second assembly (100').
C2. The method (200) of any of paragraphs C-C1, wherein the elastomer component (10) is a first elastomer component (10'), further comprising a second elastomer component (10"), and wherein the curable material (20) is arranged between the first elastomer component (10') and the second elastomer component (10").
C3. The method (200) of any of paragraphs C-C2, further comprising placing (206) the assembly (100) in an enclosure (60) and removing (206) gas from the enclosure (60) prior to heating (204) the assembly (100).
C4. The method (200) of any of paragraphs C-C3, wherein the heating (204) the assembly (100) heats the assembly (100) to a temperature in a range of 70-350 degrees Fahrenheit (F).
C5. The method (200) of any of paragraphs C-C4, wherein the outer barrier (30) comprises a first component (32) and a second component (34), wherein the elastomer component (10) and the curable material (20) are arranged between the first component (32) and the second component (34), and wherein forming the assembly (100) comprises fastening the first component (32) and the second component (34) together prior to the heating (204) the assembly (100).
C6. The method (200) of any of paragraphs C-C5, further comprising preparing (212) the elastomer component (10), and wherein forming (212) the elastomer component (10) comprises:
   mixing (214) a/the particles (42) with the elastomer material (12);
   heating (216) the particles (42) and the elastomer material (12);
C7. The method (200) of paragraph C6, wherein the particles (42) comprise a greater than 50% AVF prior to the heating (216) the particles (42) and the elastomer material (12) or the heating (204) the assembly (100).
C7.1. The method (200) of paragraph C7, wherein the particles (42) release air into the pores (40) during the heating (216) the particles (42) and the elastomer material (12) to form the elastomer component (10).
C8. The method (200) of any of paragraphs C-C7.1, wherein a compaction pressure is generated within the outer barrier (30) during the heating (204) the assembly (100).
C8.1 The method (200) of paragraph C8, wherein increasing the AVF of the elastomer component (10) decreases the generated compaction pressure.
C8.2 The method (200) of any of paragraphs C8-C8.1, wherein the generated compaction pressure is in a range of 50-200 pounds per square inch (PSI).
C9. The method (200) of any of paragraphs C-C8.2, wherein the assembly (100) is not subjected to a source of pressure external to the outer barrier (30) greater than atmosphere.
C10. The method (200) of any of paragraphs C-C9, wherein the assembly (100) is the assembly (100) of any of paragraphs B-B4.1.
D. The use of the assembly (100) of any of paragraphs B-B4.1 to cure materials.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a nonlimiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. An elastomer component (10) comprised of:
an elastomer material (12) having an air volume fraction (AVF) of greater than 5%,
wherein the elastomer component (10) is a three-dimensional solid.

2. The elastomer component (10) of claim 1, wherein the AVF is formed by pores (40) within the elastomer component (10), and wherein the pores (40) comprise trapped gas, optionally wherein the pores (40) are distributed homogenously throughout the elastomer component (10) such that the elastomer component (10) has an isotropic compressive stiffness.

3. The elastomer component (10) of claim 1 or 2, wherein the pores (40) comprise particles (42), and wherein the particles (42) are comprised of a particle material which comprises a volume of gas, optionally wherein the particles (42) are comprised of plastic.

4. The elastomer component (10) of any one of the preceding claims, wherein the AVF is in a range of 15-25%,
and/or
wherein the elastomer material (12) is silicone.

5. The elastomer component (10) of any one of the preceding claims, wherein a bulk modulus of the elastomer component (10) is less than a bulk modulus of the elastomer material (12) without the AVF, or
wherein increasing the AVF of the elastomer component (10) decreases a bulk modulus of the elastomer component (10).

6. An assembly (100) comprising:
an outer barrier (30);
a curable material (20); and
at least one elastomer component (10) according to any one of the preceding claims.

7. The assembly (100) of claim 6, wherein the at least one elastomer component (10) comprises two elastomer components (10), and wherein at least one portion of the curable material (20) is arranged between the two elastomer components (10).

8. The assembly (100) of claim 6 or 7, wherein the at least one elastomer component (10) is arranged to form an internal cavity (50) within the curable material (20), and wherein the internal cavity (50) is open to an exterior of the curable material (20) on one end.

9. The assembly (100) of any one of claims 6 to 8, wherein the outer barrier (30) completely surrounds the at least one elastomer component (10) and the curable material (20).

10. A method (200) comprising:
inserting (202) an elastomer component (10) according to any one of claims 1 to 5 and curable material (20) into an outer barrier (30) to form an assembly (100); and
heating (204) the assembly (100).

11. The method (200) of claim 10, wherein the curable material (20) is a first curable material (20'), and wherein the method (200) further comprises reusing (222) the elastomer component (10), wherein the reusing (222) comprises:
removing (224) the elastomer component (10) from the first curable material (20');
inserting (226) the elastomer component (10) and a second curable material (20") into the outer barrier (30) or a second outer barrier (30') to form (226) a second assembly (100'); and
heating (228) the second assembly (100').

12. The method (200) of claim 10 or 11, further comprising placing (206) the assembly (100) in an enclosure (60) and removing gas from the enclosure (60) prior to heating (204) the assembly (100).

13. The method (200) of any one of claims 10 to 12, wherein the outer barrier (30) comprises a first component (32) and a second component (34), and wherein the elastomer component (10) and the curable material (20) are arranged between the first component (32) and the second component (34), and wherein the forming (202) the assembly (100) comprises fastening the first component (32) and the second component (34) together prior to the heating (204) the assembly (100).

14. The method (200) of any one of claims 10 to 13, wherein the particles (42) release air into the pores (40) during the heating (204) the assembly (100) or heating (216) the elastomer material (12) and the particles (42).

15. The method (200) of any one of claims 10 to 14, wherein a compaction pressure is generated within the outer barrier (30) during the heating (204) the assembly (100), optionally wherein increasing the AVF of the elastomer component (10) reduces the compaction pressure.
